# EUROPEAN PATENT SPECIFICATION

(11) **EP 2 571 378 B1**
(45) Date of publication and mention of the grant of the patent: **17.09.2014**
(21) Application number: 11721939.4
(22) Date of filing: 17.05.2011
(51) Int. Cl.: A23L 1/09, A23L 1/30, A23L 1/305, A23L 1/308, A23L 1/00, A23D 7/005, A23D 7/01

(54) **NUTRITIONAL EMULSIONS CONTAINING ENCAPSULATED OILS**
NAHRUNGSEMULSIONEN ENTHALTEND VERKAPSELTE ÖLE
EMULSIONS NUTRITIVES CONTENANT DES HUILES ENCAPSULEES

(30) Priority: 17.05.2010 US 345337 P
(43) Date of publication of application: 27.03.2013
(73) Proprietor: ABBOTT LABORATORIES, Abbott Park, 60064 (US)
(72) Inventor: LAI, Chron-si, Blacklick, Ohio 43004 (US); SHEARER, Kati, E, Terre Haute, Indiana 47802 (US); HELMKE, Charles, R, Gahanna, Ohio 43230 (US); WALTON, Joseph, E., Westerville, Ohio 43081 (US)
(74) Representative: Boult Wade Tennant
(86) International application number: PCT/US2011/036760
(87) International publication number: WO 2011/146443

(56) References cited:
- WO-A1-2006/113819
- WO-A1-2007/060177
- WO-A1-2008/155696
- WO-A1-2009/086054
- HAAHR ET AL.: "Emulsifier type, metal chelation and pH affect oxidative stability of n-3-enriched emulsions", EUR. J. LIPID SCI. TECHNOL., vol. 110, 2008, pages 949-961, XP002652807,

## Description

The present invention relates to nutritional emulsions containing process-encapsulated oils in combination with low DE maltodextrins.

### BACKGROUND OF THE INVENTION

Nutritional liquids are well known and commercially available for a variety of nutritional or disease specific applications in infants, children and adults. These liquids are often formulated as oil-in-water emulsions comprising proteins, carbohydrates, and fats, and typically also vitamins and minerals.

These nutritional liquids have also been used to deliver variety of nutritional actives such as polyunsaturated fatty acids or fish oils. A growing body of evidence suggests that certain long chain polyunsaturated fatty acids may be beneficial for maintaining overall health, and may be useful in treating a variety of human afflictions, including cardiovascular disease, rheumatoid arthritis, depression, Alzheimer's. ulcers, cancer, hyperactivity, asthma, and similar other diseases or conditions.

Polyunsaturated fatty acids, however, often have or develop over time objectionable flavors, odors, or both, especially when formulated within a nutritional liquid. When exposed to heat and atmospheric levels of oxygen, the unsaturated structure of these polyunsaturated fatty acids reacts to form free radicals. These free radicals can continue to break down the polyunsaturated fatty acids in an auto-oxidative process, which results in the development of fishy or other undesirable flavors and odors and the eventual degradation of the beneficial polyunsaturated fatty acids.

Oxidative stability has become especially challenging when formulating a nutritional liquid containing the relatively high concentrations of polyunsaturated fatty acids often needed to obtain a therapeutic response. Allowing even some oxidation in these products often results in a highly objectionable flavor and aroma, the characteristics of which are often described as fishy, eggy, or otherwise having a rancid flavor or smell, depending upon the particular polyunsaturated fatty acid used in the formulation.

Methods of controlling the undesirable oxidation of polyunsaturated fatty acids in a nutritional product include processing or manufacturing controls to limit conditions such as elevated temperatures, exposure to ultraviolet light, exposure to oxygen and other factors that can promote oxidation. All such methods almost always include the concurrent formulation with one or more anti-oxidant additives such as ascorbic acid or ascorbyl palmitate, tocopherois, beta-carotene, or others. Although these methods are often highly effective in reducing much of the undesirable oxidation that would otherwise occur, they are often not as effective when applied to liquid nutritional compositions that contain the relatively high polyunsaturated fatty acid concentrations often needed to achieve a desired therapeutic effect.

WO 2009/086054 discloses a method of preparing a nutritional emulsion, said method comprising the steps of forming an aqueous sturry, substantially free of fat, by combining a food grade surfactant with a polydextrose having an average degree of polymerization of at least 10, combining and homogenizing the aqueous slurry with fat and protein to form a nutritional emulsion having an aqueous phase comprising from 10% to 100% by weight of the food grade surfactant and from 10% to 100% of the polydextrose, wherein the nutritional emulsion has a first viscosity of less than 300 cps as measured at 20° C and a second viscosity as measured at between 0° C and 8° C that is at least 50 cps.higher than the first viscosity and packaging the nutritional emulsion.

It has now been discovered herein that nutritional emulsions can be formulated with little or no detectable off-notes from high concentrations of polyunsaturated fatty acids. These nutritional emulsions comprise fat, protein, and carbohydrate, including up to 5% by weight of the a polyunsaturated fatty acid that is process-encapsulated by an emulsifying agent having a melt point above 25°C, and maltodextrin having a DE (Dextrose Equivalent)value of 10 or less, wherein the weight ratio of the emulsifying agent to the polyunsaturated fatty acid is at least: 15 and the weight ratio of the maltodextrin to the oil is at least 1:2.

It has also been discovered herein that these same nutritional emulsions can be prepared with most any oil having hydrophobic off-notes, not just polyunsaturated fatty acids, to effectively minimize or eliminate off-notes in the final nutritional product.

### SUMMARY OF THE INVENTION

A first embodiment of the present invention is directed to nutritional emulsions comprising fat, protein, and carbohydrate, including from 0.01% to 5% by weight of an oil having hydrophobic off-notes that is encapsulated during formulation of the nutritional emulsion in an emulsifying agent having a melt point above 25°C, and maltodextrin having a DE value 10 or less, wherein the weight ratio of the emulsifying agent to the oil having hydrophobic off-notes is at least 1:15 and the weight ratio of the maltodextrin to the oil is at least. 1:2.

A second embodiment of the present invention is directed to nutritional emulsions comprising fat, protein, and carbohydrate, including from 0.01% to 5% by weight of a polyunsaturated fatty acid that is encapsulated during formulation of the nutritional emulsion in an emulsifying agent having a melt point above 25°C, and maltodextrin having a DE value 10 or less, wherein the weight ratio of the emulsifying agent to the polyunsaturated fatty acid is at least 1:15 and the weight ratio of the maltodextrin to the polyunsaturated fatty acid is at least 1:2.

The compositions of the present invention may be prepared by: (A) heating and blending together an emulsifying agent having a melt point above 25°C and a non-encapsulated polyunsaturated fatty acid in a weight ratio of at least 1:15;(C) adding the heated blend to a fat, protein, and carbohydrate mixture comprising maltodextrin having a Dextrose Equivalent of 10 or less, in a weight ratio of the maltodextrin to the polyunsaturated fatty acid of at least 1:2; and (D) homogenizing, and then cooling the combination below the melt point of the emulsifying agent to form a nutritional emulsion comprising from 0.01% to 5% by weight of process-encapsulated polyunsaturated fatty acid.

It has been discovered herein that these oil-in-water emulsions effectively mask the flavor of oils having hydrophobic off-notes (e.g., polyunsaturated fatty acids). This is accomplished by combining process-encapsulated oils having hydrophobic off-notes (encapsulated in selected emulsifying agents) with certain maltodextrins.

It has been discovered herein that to effectively mask the hydrophobic off-notes in these emulsions, the process encapsulated oils (encapsulated during formulation with a high melting point emulsifier) must be used in combination with those maltodextrins defined by a DE value of 10 or less.

### DETAILED DESCRIPTION OF THE INVENTION

The nutritional compositions of the present invention are oil-in-water emulsions that comprise as essential elements fat, protein, and carbohydrate, including an oil having hydrophobic off-notes (e.g., polyunsaturated fatty acids), selected emulsifying agents, and selected maltodextrins. These and other essential or optional elements or limitations of the compositions of the present invention are described in detail hereinafter.

The term "nutritional emulsion" as used herein, unless otherwise specified, refers to oral liquids in the form of oil-in-water emulsions comprising fat, protein, and carbohydrates, which may be formulated as meal replacement products, nutritional supplements, or continuous (or intermittent) enteral feedings.

The terms "polyunsaturated fatty acid" or "PUFA" as used herein, unless otherwise specified, refer to any polyunsaturated fatty acid or source thereof, including short chain (less than 6 carbon atoms per chain), medium chain (from 6 to 18 carbon atoms per chain) and long chain (having at least 20 carbon atoms per chain) fatty acids having two or more carbon:carbon double bonds, including n-3 (omega-3) and n-6 (omega-6) polyunsaturated fatty acids.

The term "process-encapsulated" as used herein refers to the combination of a oil having hydrophobic off-notes and a high melting point emulsifier, wherein the two are combined to form a liquid intermediate during processing but prior to incorporation into the nutritional emulsion, and are added in liquid form to one or more of fat, protein, and carbohydrate intermediate ingredients, to thereafter effectively result in solid encapsulation of the oil having hydrophobic off-notes by the high melting point emulsifier in the finished product.

All percentages, parts and ratios as used herein are by weight of the total composition, unless otherwise specified. All such weights as they pertain to listed ingredients are based on the active level and, therefore, do not include solvents or byproducts that may be included in commercially available materials, unless otherwise specified.

All numerical ranges as used herein, whether or not expressly preceded by the term "about", are intended and understood to be preceded by that term, unless otherwise specified.

Any reference to singular characteristics or limitations of the present invention shall include the corresponding plural characteristic or limitation, and vice versa, unless otherwise specified or clearly implied to the contrary by the context in which the reference is made.

Any combination of method or process steps as used herein can be performed in any order, unless otherwise specified or clearly implied to the contrary by the context in which the referenced combination is made.

The nutritional emulsions of the present invention may also be substantially free of any optional or a selected essential ingredient or feature described herein, provided that the remaining formula still contains all of the required ingredients or features as described herein. In this context, the term "substantially free" means that the selected composition contains less than a functional amount of the optional ingredient, typically less than 0.1 % by weight, and also including zero percent by weight, of such optional or selected essential ingredient.

The nutritional emulsions of the present invention may comprise, consist of, or consist essentially of the essential elements and limitations of the invention described herein, as well as any additional or optional ingredients, components, or limitations described herein or otherwise useful in a nutritional or pharmaceutical application.

### Low DE Maltodextrin

The nutritional emulsions of the present invention comprise a maltodextrin having a dextrose equivalent (DE) of 10 or less, including from 1 to 5, including from 2 to 4, and also including a 3. Suitable maltodextrins for use herein are those that are safe for use in oral nutritional products and that also have the requisite DE value.

It has been found that only those maltodextrins having the requisite DE value will effectively work along with the process-encapsulated oil to minimize or eliminate hydrophobic off-notes associated the oil. It has also been found that DE 3 maltodextrin is even more effective in minimizing hydrophobic off-notes than either DE 1 or DE 5 maltodextrins.

The concentration of maltodextrin in the nutritional emulsion is selected so that the resulting weight ratio of maltodextrin to polyunsaturated fatty acid (or other oil having hydrophobic off-notes) is at least 1:2, preferably from 1:1 to 20:1, including from 2:1 to 10:1, and also including from 2.5:1 to 4:1. These maltodextrin concentrations most typically range from 0.1% to 20%, including from 1% to 10%, and also including from 2% to 7%, by weight of the nutritional emulsion.

Maltodextrins are known for use in a variety of foods and other nutritional products. Maltodextrins are partially hydrolyzed starch molecules comprising a series of D-glucose units linked primarily by (alpha)-1,4 bonds. Although maltodextrins, as an ingredient class, have DE values of 20 or less, only those having DE values of 10 or less are suitable for use herein.

DE values are conventional measurements of the average reducing power of maltodextrin or other polysaccharide as compared to a dextrose standard. DE values are derived from the formula [ DE = 100 + DP ], where DP is the degree of polymerization of the maltodextrin or other material, i.e., the number of monosaccharide units in the polysaccharide. Glucose (dextrose) has a DE of 100; starch has a DE of approximately or dose to zero.

The maltodextrins for use herein may also be characterized, in the alternative, in terms of DP values rather than DE values, wherein the DP value is 10 or higher, including from 10 to 250, and also including from 40 to 150.

Non-limiting examples of suitable maltodextrins for use herein include STAR-DRI® 1 (DE 1) and STAR-DRI® 5 (DE 5) from AE Staley Mfr. Company, Decatur, Illinois, USA; and M-40 (DE 5) from Grain Processing Corporation, Muscatine, lowa, USA. Other maltodextrins - those having a DE value greater than 10 - may be added, but only as optional ingredients in addition to the other required maltodextrin component.

### Oil Having Hydrophobic Off-notes

The nutritional emulsions of the present invention comprise an oil having hydrophobic off-notes that is encapsulated during formulation (of the nutritional emulsion) by a high melting point emulsifying agent as described hereinafter.

It should be noted that the oil having hydrophobic off notes is not encapsulated prior to formulation, that it becomes encapsulated only during formulation of the nutritional emulsion.

The term "oils having hydrophobic off-notes" as used herein, unless otherwise specified, means any hydrophobic material that inherently contains off-notes, or otherwise comprises an ingredient that contributes off-notes to the oil. Examples of oils having hydrophobic off-notes include polyunsaturated fatty acids, soy oil, beta-hydroxy-beta-methylbutyrate or oils containing it, and combinations thereof. The oil preferably comprises a polyunsaturated fatty acid as described herein.

The term "off-notes" as used herein refers to any flavor or aroma inherently associated with an oil or material within oil that a formulator would wish to minimize or eliminate when formulated into a nutritional emulsion.

The concentration of the oil having hydrophobic off-notes within the nutritional emulsion represents up to 5%, including from 0.01% to 5%, also including from 0.3% to 3%, and also including from 0.5% to 2.5%. by weight of the nutritional emulsion.

The oil having the hydrophobic off-notes must be process-encapsulated by the high melting temperature emulsifying agent, wherein the oil having the hydrophobic off-notes preferably represents from 50% to 100%, including from 60% to 90%, also including from 75% to 85%, by weight of all material so encapsulated (excluding the high-melting point emulsifying agent). In this context, all other fats within the nutritional emulsion are preferably formulated into the nutritional emulsion separate from and external to the process-encapsulated oil/emulsify agent combination. In other words, the high melting temperature emulsifying agent is melted and combined with the oil having the hydrophobic off-notes prior to formulating it into the nutritional emulsion. The encapsulation of the oil is achieved during processing when the blend is heat treated (UHT), homogenized and chilled.

Although the oils having hydrophobic off-notes can be added to the nutritional emulsion in addition to and separate from the process-encapsulated oils having hydrophobic off-notes, the emulsions are preferably free of such additional oils having hydrophobic off-notes. In this context, "substantially free" means that the composition preferably contains less than 0.1%, more preferably less than 0.05%, including zero percent, by weight of such additional oils having hydrophobic off-notes, including both pre-encapsulated and non-encapsulated forms.

For polyunsaturated fatty acid embodiments of the present invention, the polyunsaturated fatty acids for use in the nutritional emulsions include any such fatty acid material, or source thereof, that is suitable for use in oral nutritional products, non-limiting examples of which include n-3 polyunsaturated fatty acids, n-6 polyunsaturated fatty acids, and combinations thereof. Suitable sources of polyunsaturated fatty acids include free fatty acids as well as fatty acid esters such as triglycerides, diglycerides, monoglycerides, ethyl esters, and so forth, including various concentrated forms thereof as well as those in structured lipid form.

Non-limiting examples of suitable polyunsaturated fatty acids for use herein include n-3 polyunsaturated fatty acids such as alpha-linolenic acid (ALA, C18:3n-3), stearidonic acid (C18:4n-3), eicosapentaenoic acid (EPA, C20:5n-3), docosapentaenoic acid (C22:5n-3), docosahexaenoic acid (DHA, C22:6n-3), and combinations thereof. Sources of such n-3 fatty acids for use herein include flax seed oil, canola oil, transgenic oils, and fish oil.

Other polyunsaturated fatty acids suitable for use herein include n-6 polyunsaturated fatty acids such as linoleic acid (C18:2n-6), gamma-linolenic acid (GLA, C18:3n-6), eicosadienoic acid (C20:2n-6), arachidonic acid (ARA, C20:4n-6), di-homo-gamma-linolenic acid (DGLA, C20:3n-6), and combinations thereof, sources of which include evening primrose oil, borage oil, black currant seed oil, flaxseed oil, transgenic sources, purified fatty acid sources, and combinations thereof.

### High Melting Point Emulsifier

High melting point emulsifier for use herein includes any emulsifying agent suitable for use in a nutritional product that also has a melt point of at least 25°C, preferably from 30°C to 75°C, more preferably from 45°C to 70°C.

The selected emulsifier and the oil having hydrophobic off-notes are melted together to form a liquid, and this mixture is added to the rest of the nutritional formulation (a fat-carbohydrate-protein-mineral blend). The resultant blend is then UHT (Ultra High Temperature) heat-treated and homogenized. The homogenization divides the fish oil into very small droplets coated with the high melting temperature emulsifier. When this homogenized blend is cooled to below room temperature, the emulsifier solidifies, thus resulting in encapsulation of the polyunsaturated fatty acid (also referred to herein as "process-encapsulated polyunsaturated fatty acid) or other hydrophobic oil having off-notes (referred to herein as "process-encapsulated oils having hydrophobic off-notes")

The amount or concentration of the high melting point emulsifier in the nutritional emulsions is selected so that the resulting weight ratio of the emulsifier to the oil having hydrophobic off-notes is at least 1:15, preferably from 1:10 to 1:1, including from 1:9 to 1:2, and also including from 1:5 to 1:2 Such emulsifier concentrations most typically range from 2% to 12%, including from 4 to 10%, and also including from 5 to 8%, by weight of the total oil in the emulsion. It is understood, however, that even higher concentrations of emulsifier can be used, especially when additional emulsifier is added for purposes other than encapsulation of the oil having hydrophobic off-notes, e.g., for emulsion stability.

Suitable high melting point emulsifying agents include monoglycerides or other monoesters of polyhydric alcohols, including fatty acid esters of glycerol. Non-limiting examples of some suitable high melting point emulsifiers for use herein include GRINDSTED™ ACETEM (acetic acid esters of monoglycerides), GRINDSTED™ CITREM (citric acid esters of monoglycerides); GRINDSTED™ LACTEM (lactic acid esters of monoglycerides); GRINDSTED™ Mono-Di (mono and diglycerides); GRINDSTED™ PGE or PGPR (polyglycerol esters of fatty acids, polyglycerol polyricinoleate);GRINDSTED™ PGMS (propylene glycerol esters of fatty acids); GRINDSTED™ SMS or STS (sorbitan monostearate, sorbitan tristearate); and DIMODAN® distilled monoglycerides; all available from Danisco, Copenhagen, Denmark.

Other suitable high melting point emulsifying agents include MYVEROL® 18-99K, a distilled monoglyceride comprising a blend of about 82% monoacylglycerols (86.6% monoolein, 7.0% monostearin, 3.5% monopalmitin, 0.9% monoarachidin, 2.0% unidentified), available from Kerry Bio-Science, Hoffman Estates, Illinois, USA.

### Macronutrients

The nutritional emulsions of the present invention comprise fat, protein, and carbohydrate macronutrients. Any source of such nutrients known or otherwise suitable for use in an oral nutritional product is also suitable for use herein, provided that such nutrients are compatible with the selected ingredients in the formulation.

Although concentrations or amounts of each macronutrient in the nutritional emulsion may vary depending upon the nutritional needs of the intended user, such concentrations or amounts most typically fall within one of the following embodied ranges.

| **Macronutrient** | **Embodiments** | | |
|---|---|---|---|
| | A | B | C |
| **Carbohydrate¹ - % total calories** | 10-85 | 20-60 | 40-60 |
| **Fat² - % total calories** | 10-85 | 10-50 | 15-35 |
| **Protein - % total calories** | 5-80 | 10-30 | 15-25 |
| | | | |
| **Carbohydrate¹ g/100ml** | 1-40 | 4-30 | 10-20 |
| **Fat² g/100ml** | 0.2-30 | 0.5-15 | 1-5 |
| **Protein g/100ml** | 0.5-30 | 1-15 | 2-10 |

| | | | |
|---|---|---|---|
| 1. Includes maltodextrin component 2. Includes oil having hydrophobic off-notes: may also include emulsifying agent (if a fat) | | | |

The nutritional emulsions comprise a fat source, which includes the oil having hydrophobic off-notes (e.g., polyunsaturated fatty acid) as described herein. The oil having hydrophobic off-notes may represent all or just some of the fat source. Non-limiting examples of fats for use herein include (in addition to oils having hydrophobic off-notes such polyunsaturated fatty acids) coconut oil, fractionated coconut oil, soy oil (without hydrophobic off-notes), corn oil, olive oil, safflower oil, high oleic safflower oil, MCT oil (medium chain triglycerides), sunflower oil, high oleic sunflower oil, palm and palm kernel oils, palm olein, canola oil, marine oils, cottonseed oils, and combinations thereof. The term "fat" as used herein includes both fats and oils, solid or liquid, unless otherwise specified.

The nutritional emulsions comprise a carbohydrate source, which includes the maltodextrin component described herein. The maltodextrin may represent all or just some of the carbohydrate source. Non limiting examples of carbohydrates for use herein include additional hydrolyzed or modified starch or cornstarch, glucose polymers, corn syrup, corn syrup solids, rice-derived carbohydrate, glucose, fructose, lactose, high fructose corn syrup, indigestible oligosaccharides (e.g., fructooligosaccharides), honey, sugar alcohols (e.g., maltitol, erythritol, sorbitol), and combinations thereof.

The nutritional emulsions comprise a protein source suitable for use in a nutritional emulsion. Proteins or protein sources suitable for use herein include hydrolyzed, partially hydrolyzed or non-hydrolyzed proteins or protein sources, and can be derived from any known or otherwise suitable source such as milk (e.g., casein, whey), animal (e.g., meat, fish), cereal (e.g., rice, corn), vegetable (e.g., soy), or combinations thereof. Non-limiting examples of such proteins include milk protein isolates, casein protein isolates, milk protein concentrate, whole cows milk, partially or completely defatted milk, soy protein isolates, and so forth.

### Optional Ingredients

The nutritional emulsions of the present invention may further comprise other optional components that may modify the physical, chemical, aesthetic or processing characteristics of the products or serve as pharmaceutical or additional nutritional components when used in the targeted population. Many such optional ingredients are known or otherwise suitable for use in other nutritional products and may also be used in the compositions herein, provided that such optional ingredients are safe and effective for oral administration and are compatible with the essential and other ingredients in the selected product form.

Non-limiting examples of such optional ingredients include preservatives, antioxidants, other additional emulsifying agents, buffers, pharmaceutical actives, additional nutrients as described herein, sweeteners including artificial sweeteners (e.g., saccharine, aspartame, acesulfame K, sucralose) colorants, flavors, thickening agents and stabilizers, and so forth.

The nutritional emulsions of the present invention may further comprise any of a variety of other vitamins or related nutrients, non-limiting examples of which include vitamin A, vitamin D, vitamin E, vitamin K, thiamine, riboflavin, pyridoxine, vitamin B₁₂, carotenoids, niacin, folic acid, pantothenic acid, biotin, vitamin C, choline, inositol, salts and derivatives thereof, and combinations thereof.

The nutritional emulsions may further comprise any of a variety of other additional minerals, non-limiting examples of which include calcium, phosphorus, magnesium, iron, zinc, manganese, copper, sodium, potassium, molybdenum, chromium, chloride, and combinations thereof.

### Manufacture

The nutritional emulsion of the present invention may be prepared by any known or otherwise effective manufacturing technique for preparing a liquid nutritional, modified in accordance with the method as noted below for effectively formulating a process-encapsulated oil having hydrophobic off-notes with a high melting point emulsifier and then subsequently incorporating the combination into the nutritional emulsion.

The nutritional emulsion may be prepared by separately formulating a protein-in-water slurry (majority protein and water), a carbohydrate-mineral slurry (mineral, carbohydrate including maltodextrin), a protein-in-fat slurry (protein, fat soluble vitamins, fat) and then having these slurries combined to form a blend before the oil having hydrophobic off-notes/high melting temperature emulsifier is added to the blend. The resulting blend is then heat processed, homogenized, standardized with any water-soluble vitamins, flavored, and the resulting nutritional emulsion terminally sterilized or aseptically processed and filled and allowed to cool.

A method for making the nutritional emulsions of the present invention may therefore comprise:
(A) heating and blending together an emulsifying agent having a melt point above 25°C and a oil having hydrophobic off-notes in a weight ratio of at least 1:15; and
(C) adding the heated blend to a fat, protein, and carbohydrate mixture comprising a maltodextrin having a Dextrose Equivalent of 10 or less, in a weight ratio of the maltodextrin to the oil having hydrophobic off-notes of at least 1:2; and
(D) homogenizing and then cooling the combination below the melt point of the emulsifying agent to form a nutritional emulsion comprising from 0.01% to 5% by weight of process-encapsulated oil (or other oil having hydrophobic off-notes).

This particular method may be modified in accordance with any or all the variations directed to the nutritional emulsion embodiments as described herein.

### EXAMPLES

The following examples illustrate specific embodiments of the nutritional emulsions of the present invention. These examples are given solely for the purpose of illustration and are not to be construed as limitations of the present invention, as many variations thereof are possible without departing from the spirit and scope of the invention.

Each nutritional emulsion described below is prepared by separately formulating a protein-in-water slurry, a carbohydrate and mineral slurry, and an oil fiber slurry. The oil having the hydrophobic off-notes (e.g., fish oils) and emulsifier blend is prepared separately by heating and blending the two together at a temperature sufficient to melt the solid emulsifier, to thus form a heated liquid blend. The formed slurries are then combined to form a single mixture, and thereafter the fish oil and emulsifier blend (as a heated liquid) is added to the single mixture. The resulting combination is then heat processed, homogenized, standardized with any water-soluble vitamins, flavored, and the resulting nutritional emulsion terminally sterilized or aseptically processed and filled and allowed to cool.

Ingredients used in preparation of the exemplified embodiment are listed in the following table. The finished emulsion is orally administered, on a daily basis, to individuals as a dietary source of polyunsaturated fatty acids, in an amount sufficient to provide sole or supplement nutrition to the targeted users. These Individuals fail to detect any off-flavors or odors associated with the fatty acid component, during or within two hours following consumption.

### Nutritional Emulsion (1000 kg)

| **Ingredient** | **Amount** | **Amount** | | **Amount** |
|---|---|---|---|---|
| **Protein in water slurry** | | | | |
| Water | 430 kg | 430 kg | 430 kg | 5.64 kg |
| Sodium caseinate (92% protein) | 10.8 kg | 10.8 kg | 10.8 kg | 10.8 kg |
| ALANATE® 166 (92% protein) partially hydrolyzed sodium caseinate, New Zealand Milk Products, Santa Rosa, CA, USA | 5.64 kg | 5.64 kg | 5.64 kg | 5.64 kg |
| Allapro 4900 (84% protein) Milk protein isolate, New Zealand Milk Products | 30.8 kg | 30.8 kg | 30.8 kg | 30.8 kg |

| **Carbohydrate and mineral slurry** | | | | |
|---|---|---|---|---|
| Water | 194.5 kg | 194.5 kg | 194.5 kg | 194.5 kg |
| STAR-DRI® DE-1 Maltodextrin, AE Staley Mfr. Company, Decatur, IL, USA | 45.45 kg | -- | 45.45 kg | 45.45 kg |
| Maltodextrin DE-5 | -- | 45.45 kg | -- | -- |
| Maltitol syrup (70% solids) | 34.36 kg | 34.36 kg | 34.36 kg | 34.36 kg |
| Fructose crystalline | 28.00 kg | 28.00 kg | 28.00 kg | 28.00 kg |
| MALTRIN® M-200, corn syrup solids, Grain Processing Corp., Muscatine, IA, USA | 22.55 kg | 22.55 kg | 22.55 kg | 22.55 kg |
| Fructooligosaccharides | 12.73 kg | 12.73 kg | 12.73 kg | 12.73 kg |
| Magnesium phosphate dibasic | 1.10 kg | 1.10 kg | 1.10 kg | 1.10 kg |
| Sodium citrate | 2.40 kg | 2.40 kg | 2.40 kg | 2.40 kg |
| Potassium chloride | 1.20 kg | 1.20 kg | 1.20 kg | 1.20 kg |
| Tricalcium phosphate | 0.899 kg | 0.899 kg | 0.899 kg | 0.899 kg |
| Calcium carbonate | 0.802 kg | 0.802 kg | 0.802 kg | 0.802 kg |
| AVICEL® (microcrystalline cellulose), FMC Biopolymer, Philadelphia, PA, USA | 0.526 kg | 0.526 kg | 0.526 kg | 0.526 kg |
| Magnesium chloride | 0.802 kg | 0.802 kg | 0.802 kg | 0.802 kg |
| Potassium phosphate dibasic | 0.350 kg | 0.350 kg | 0.350 kg | 0.350 kg |
| Choline chloride | 0.343 kg | 0.343 kg | 0.343 kg | 0.343 kg |
| Trace and ultra trace mineral premix | 0.269 kg | 0.269 kg | 0.269 kg | 0.269 kg |
| Potassium citrate | 0.549 kg | 0.549 kg | 0.549 kg | 0.549 kg |
| Gellan gum | 0.200 kg | 0.200 kg | 0.200 kg | 0.200 kg |
| Guar gum | 3.27 kg | 3.27 kg | 3.27 kg | 3.27 kg |
| Konjac | 5.64 kg | 5.64 kg | 5.64 kg | 5.64 kg |
| Potassium Iodide | 0.002 kg | 0.002 kg | 0.002 kg | 0.002 kg |

| **Fish oil/high melting temperature emulsifier** | | | | |
|---|---|---|---|---|
| Marine oil (Mochida-Nissui) (50% Omega-3 Sardine Oil) | 8.0 kg | 8.0 kg | -- | 16.0 kg |
| MYVEROL® 18-06 Grindsted Products ² | 8.0 kg | 8.0 kg | 8.0 kg | 8.0 kg |
| Soy oil | -- | -- | 8.0 kg | |

| **Oil fiber slurry** | | | | |
|---|---|---|---|---|
| Diacylglycerol Oil | 17.64 kg | 17.64 kg | 17.64 kg | 17.64 kg |
| Canola Oil | 1.58 kg | 1.58 kg | 1.58 kg | 1.58 kg |
| Hiqh Oleic Safflower Oil | 9.41 kg | 9.41 kg | 9.41 kg | 9.41 kg |
| Soy Lecithin | 0.732 kg | 0.732 kg | 0.732 kg | 0.732 kg |
| Vitamin E | 0.072 kg | 0.072 kg | 0.072 kg | 0.072 kg |
| Lutein | 0.050 kg | 0.050 kg | 0.050 kg | 0.050 kg |
| Vitamin A Palmitate (54% in corn oil) | 0.0078 kg | 0.0078 kg | 0.0078 kg | 0.0078 kg |
| Vitamin DEK | 0.047 kg | 0.047 kg | 0.047 kg | 0.047 kg |

| **Water soluble vitaminiflavor Solution** | | | | |
|---|---|---|---|---|
| Water | 7.55 kg | 7.55 kg | 7.55 kf | 7.55 kg |
| Ascorbic Acid | 0.424 kg | 0.424 kg | 0.424 kg | 0.424 kg |
| Liquid Sucralose (25%) | 0.300 kg | 0.300 kg | 0.300 kg | 0.300 kg |
| Vitamin Premix | 0.071 kg | 0.071 kg | 0.071 kg | 0.071 kg |
| Choline chloride | 0.343 kg | 0.343 kg | 0.343 kg | 0.343 kg |
| Raspberry flavor | 2.3 kg | 2.3 kg | 2.3 kg | 2.3 kg |
| FD&C Red #3 | 0.003 kg | 0.003 kg | 0.003 kg | 0.003 kg |
| FD&C Blue #1 | 00035 kg | 0.0035 kg | 00035 kg | 00035 kg |
| Dilution Water | 55 kg | 55k g | 55 kg | 55 kg |

| | | | | |
|---|---|---|---|---|
| 1. Provides 3.93 kg polyunsaturated fatty acids, including docosahexaenoic acid 2. Emulsifying agent - melting point 69-75°C | | | | |

## Claims

1. A nutritional emulsion comprising fat, protein, and carbohydrate, including:
(A) from 0.01 % to 5% by weight of an oil having hydrophobic off-notes that is encapsulated during formulation of the nutritional emulsion by an emulsifying agent having a melt point above 25°C, and
(B) maltodextrin with a DE of 10 or less,
wherein the weight ratio of the emulsifying agent to the oil having hydrophobic off-notes is at least 1:15 and the weight ratio of the maltodextrin to the oil having hydrophobic off-notes is at least 1:2.

2. The nutritional emulsion according to claim 1 wherein the oil having hydrophobic off-notes is selected from the group consisting of polyunsaturated fatty acids, soy oil, beta-hydroxy-beta-methylbutyrate containing oil, and combinations thereof.

3. The nutritional emulsion according to claim 1 wherein the oil having hydrophobic off-notes is a polyunsaturated fatty acid.

4. The nutritional emulsion according to claim 3 wherein the weight ratio of the emulsifying agent to the encapsulated polyunsaturated fatty acid is from 1:9 to 1:2 and the weight ratio of the maltodextrin to the encapsulated polyunsaturated fatty acid is from 1:1 to 20:1.

5. The nutritional emulsion according to claim 3 wherein the weight ratio of the emulsifying agent to the encapsulated polyunsaturated fatty acid is from 1:5 to 1:2 and the weight ratio of the maltodextrin to the encapsulated polyunsaturated fatty acid is from 2.5:1 to 4:1.

6. The nutritional emulsion according to claim 3 wherein the emulsion comprises from 0.3% to 3% by weight of the encapsulated polyunsaturated fatty acid.

7. The nutritional emulsion according to claim 3 wherein the emulsion is substantially free of polyunsaturated fatty acids other than the encapsulated polyunsaturated fatty acid.

8. The nutritional emulsion according to claim 3 wherein the emulsifying agent has a melt point of from 45°C to 70°C.

9. The nutritional emulsion according to claim 3 wherein the emulsifying agent is a monoglyceride.

10. The nutritional emulsion according to claim 3 wherein the polyunsaturated fatty acid includes eicosapentaenoic acid, docosahexaenoic acid, or both.

11. The nutritional emulsion according to 3 wherein the emulsion comprises from 0.1 % to 20% by weight of the maltodextrin and the maltodextrin has a DE of from 1 to 5.

12. The nutritional emulsion according to claim 3 wherein the maltodextrin has a DE value of 3.

13. The nutritional emulsion according to claim 3 wherein the emulsion comprises, as a percentage of total calories, from 10% to 85% carbohydrate, from 10% to 85% fat, and from 5% to 80% protein.

## Patentansprüche

1. Nahrungsmittelemulsion, die Fett, Protein und Kohlenhydrat enthält und aufweist:
(A) 0,01 bis 5 Gew.-% eines Öls mit hydrophoben Beinoten, das während der Formulierung der Nahrungsmittelemulsion mit Hilfe eines Emulgators mit einem Schmelzpunkt über 25 °C eingekapselt wurde, und
(B) Maltodextrin mit einem DE-Wert (DE; Dextrose Equivalent) von 10 oder weniger,
wobei das Gewichtsverhältnis des Emulgators und des Öls mit hydrophoben Beinoten zumindest 1 : 15 beträgt und das Gewichtsverhältnis des Maltodextrins und des Öls mit hydrophoben Beinoten zumindest 1 : 2 ist.

2. Nahrungsmittelemulsion nach Anspruch 1, wobei das Öl mit hydrophoben Beinoten unter den mehrfach ungesättigten Fettsäuren, Sojaöl, beta-Hydroxy-beta-methylbutyrat enthaltenden Ölen und deren Kombinationen ausgewählt ist.

3. Nahrungsmittelemulsion nach Anspruch 1, wobei das Öl mit hydrophoben Beinoten eine mehrfach ungesättigte Fettsäure ist.

4. Nahrungsmittelemulsion nach Anspruch 3, wobei das Gewichtsverhältnis des Emulgators und der eingekapselten, mehrfach ungesättigten Fettsäure 1 : 9 bis 1 : 2 und das Gewichtsverhältnis des Maltodextrins und der eingekapselten, mehrfach ungesättigten Fettsäure 1 : 1 bis 20 : 1 beträgt.

5. Nahrungsmittelemulsion nach Anspruch 3, wobei das Gewichtsverhältnis des Emulgators und der eingekapselten, mehrfach ungesättigten Fettsäure 1 : 5 bis 1 : 2 und das Gewichtsverhältnis des Maltodextrins und der eingekapselten, mehrfach ungesättigten Fettsäure 2,5 : 1 bis 4 : 1 beträgt.

6. Nahrungsmittelemulsion nach Anspruch 3, wobei die Emulsion 0,3 bis 3 Gew.-% der eingekapselten, mehrfach ungesättigten Fettsäure enthält.

7. Nahrungsmittelemulsion nach Anspruch 3, wobei die Emulsion abgesehen von der eingekapselten, mehrfach ungesättigten Fettsäure im Wesentlichen keine mehrfach ungesättigten Fettsäuren enthält.

8. Nahrungsmittelemulsion nach Anspruch 3, wobei der Emulgator einen Schmelzpunkt von 45 bis 70 °C aufweist.

9. Nahrungsmittelemulsion nach Anspruch 3, wobei der Emulgator ein Monoglycerid ist.

10. Nahrungsmittelemulsion nach Anspruch 3, wobei die mehrfach ungesättigte Fettsäure Eicosapentaensäure, Docosahexaensäure oder beide umfasst.

11. Nahrungsmittelemulsion nach Anspruch 3, wobei die Emulsion 0,1 bis 20 Gew.-% Maltodextrin enthält und das Maltodextrin einen DE-Wert von 1 bis 5 aufweist.

12. Nahrungsmittelemulsion nach Anspruch 3, wobei das Maltodextrin einen DE-Wert von 3 hat.

13. Nahrungsmittelemulsion nach Anspruch 3, wobei die Emulsion als prozentualen Anteil der Gesamtkalorien 10 bis 85 % Kohlenhydrat, 10 bis 85 % Fett und 5 bis 80 % Protein enthält.

## Revendications

1. Emulsion nutritive comprenant des graisses, protéines et hydrates de carbone, incluant :
(A) de 0,01% à 5% en poids d'une huile ayant un mauvais goût hydrophobe, qui est encapsulé durant la formulation de l'émulsion nutritionnelle par un agent émulsifiant ayant un point de fusion au-dessus de 25 °C, et
(B) une maltodextrine avec un DE de 10 ou moins,
où le rapport pondéral de l'agent émulsifiant à l'huile ayant le mauvais goût hydrophobe est au moins de 1 :15, et le rapport pondéral de la maltodextrine à l'huile ayant le mauvais goût hydrophobe est au moins de 1 :2.

2. Emulsion nutritive selon la revendication 1, dans laquelle l'huile ayant le mauvais goût hydrophobe est sélectionnée dans le groupe consistant en acides gras polyinsaturés, huile de soja, huile contenant du béta-hydroxy-béta-méthyl-butyrate et leurs combinaisons.

3. Emulsion nutritive selon la revendication 1, dans laquelle l'huile ayant le mauvais goût hydrophobe est un acide gras polyinsaturé.

4. Emulsion nutritive selon la revendication 3, dans laquelle le rapport pondéral de l'agent émulsifiant à l'acide gras polyinsaturé encapsulé est de 1 :9 à 1 :2, et le rapport pondéral de la maltodextrine à l'acide gras polyinsaturé encapsulé est de 1 :1 à 20 :1.

5. Emulsion nutritive selon la revendication 3, dans laquelle le rapport pondéral de l'agent émulsifiant à l'acide gras polyinsaturé encapsulé est de 1 :5 à 1 :2, et le rapport pondéral de la maltodextrine à l'acide gras polyinsaturé encapsulé est de 2,5 :1 à 4 :1.

6. Emulsion nutritive selon la revendication 3, dans laquelle l'émulsion comprend de 0,3% à 3% en poids de l'acide gras polyinsaturé encapsulé.

7. Emulsion nutritive selon la revendication 3, dans laquelle l'émulsion est sensiblement exempte d'acides gras polyinsaturés autres que l'acide gras polyinsaturé encapsulé.

8. Emulsion nutritive selon la revendication 3, dans laquelle l'agent émulsifiant possède un point de fusion de 45°C à 70 °C.

9. Emulsion nutritive selon la revendication 3, dans laquelle l'agent émulsifiant est un mono-glycéride.

10. Emulsion nutritive selon la revendication 3, dans laquelle l'acide gras polyinsaturé comprend l'acide eicosapentaénoïque, l'acide docosahexaénoïque ou les deux.

11. Emulsion nutritive selon la revendication 3, dans laquelle l'émulsion comprend de 0,1% à 20% en poids de maltodextrine, et la maltodextrine a un DE de 1 à 5.

12. Emulsion nutritive selon la revendication 3, dans laquelle la maltodextrine a une valeur DE de 3.

13. Emulsion nutritive selon la revendication 3, dans laquelle l'émulsion comprend, comme un pourcentage des calories au total, de 10% à 85% d'hydrates de carbone, de 10% à 85% de graisses et de 5% à 80% de protéines.
